# DEMANDE DE BREVET EUROPEEN

(11) **EP 1 847 683 A1**
(43) Date de publication de la demande: **24.10.2007**
(21) Numéro de dépôt: 07106365.5
(22) Date de dépôt: 18.04.2007
(51) Int. Cl.: F01D 5/14

(54) **Profil aerodynamique optimisé pour une aube de turbine**

(30) Priorité: 20.04.2006 FR 0651384
(71) Demandeur: SNECMA, 75015 Paris (FR)
(72) Inventeur: Botrel, Erwan, 94140, Alfortville (FR); Lafarge, Grégory, 77320, Choisy en Brie (FR); Picot, Philippe, 77820, Le chatelet en Brie (FR)
(74) Mandataire: Intes, Didier Gérard André

(57) **Abrégé**

A froid et à l'état non revêtu, le profil aérodynamique est sensiblement identique à un profil nominal déterminé par les coordonnées cartésiennes X, Y, Z' données dans le tableau 1, dans lequel la coordonnée Z' est le quotient D/H où D est la distance du point considéré à un plan de référence P0 situé à la base du profil nominal et H est la hauteur de ce profil, mesurée depuis le plan de référence jusqu'au sommet de l'aube. Les mesures D et H sont prises radialement par rapport à l'axe de la turbine, tandis que la coordonnée X est mesurée dans la direction axiale de la turbine.

## Description

La présente invention concerne un profil aérodynamique d'aube de turbine.

En particulier, l'invention concerne le profil aérodynamique d'une aube d'une roue mobile de turbine à gaz et, plus particulièrement, une turbine haute pression du type utilisé dans un turboréacteur d'engin aéronautique.

Un tel profil doit permettre à la turbine d'assurer le rendement souhaité et, pour cela, il doit être tel que l'écoulement d'air autour de ce profil soit sain, c'est-à-dire sensiblement tel qu'il ne provoque pas de turbulences néfastes au rendement global. De plus, il doit supporter des contraintes mécaniques élevées et permette la répartition de celles-ci dans l'aube de manière à éviter une usure prématurée de cette dernière. En d'autres termes, le profil aérodynamique doit permettre d'optimiser les performances aérodynamiques et mécaniques de l'aube.

Par ailleurs, le profil doit pouvoir s'implanter correctement sur le pied d'une aube complète et pouvoir être fabriqué sans difficulté excessive. En particulier, pour l'application à des turboréacteurs, le profil doit permettre l'implantation d'un circuit de refroidissement de manière à assurer l'intégrité thermique de l'aube, c'est-à-dire à éviter les zones de surchauffe, dans le domaine de fonctionnement du turboréacteur.

L'invention a pour but de proposer un profil aérodynamique d'aube de turbine optimisé, capable de répondre à ces objectifs.

Ce but est atteint grâce au fait que, à froid et à l'état non revêtu, ledit profil est sensiblement identique à un profil nominal déterminé par les coordonnées cartésiennes X,Y,Z' données dans le tableau 1, dans lequel la coordonnée Z' est le quotient D/H où D est la distance du point considéré à un plan X,Y de référence, situé à la base du profil nominal et H est la hauteur de ce profil, mesurée depuis ledit plan de référence jusqu'au sommet de l'aube, les mesures D et H étant prises radialement par rapport à l'axe de la turbine, tandis que la coordonnée X est mesurée dans la direction axiale de la turbine.

Ce profil a été déterminé après de nombreux essais et simulations. Il est défini à froid, c'est-à-dire à une température ambiante de 20°C. Il s'agit d'une température de référence, à laquelle le profil est déterminé géométriquement. Les objectifs d'optimisation aérodynamique et mécanique indiqués ci-dessus sont bien évidemment valables pour les conditions d'utilisation de ce profil aérodynamique, c'est-à-dire à chaud, à une température stabilisée en régime de croisière d'utilisation du moteur dont fait partie la turbine.

Par ailleurs, le profil aérodynamique selon l'invention est défini à l'état non revêtu. Les aubes de turbine devant être soumises à des gradients de température élevée, il est fréquent qu'elles soient pourvues d'un revêtement ayant des propriétés thermiques leur permettant de supporter plus facilement ces variations de température. Le profil est déterminé avant la pose d'un tel revêtement.

Il est indiqué ci-dessus que le profil de l'invention est "sensiblement identique" au profil nominal. Ceci signifie que le profil peut très légèrement varier par rapport à ce profil nominal.

Le profil aérodynamique est ainsi de préférence défini dans une enveloppe de ± 1mm dans une direction normale à la surface du profil nominal.

Cette variation tient compte, en particulier, des tolérances de fabrication du profil.

Il est également préférable que les coordonnées X,Y du profil aérodynamique soient comprises dans la plage de ± 5% par rapport aux coordonnées X,Y du profil nominal.

Cette variation tient compte du calage du profil pour l'adapter à l'écoulement provenant du distributeur situé en amont, de manière à améliorer encore le rendement de la turbine.

L'invention sera bien comprise et ses avantages apparaîtront mieux à la lecture de la description détaillée qui suit, d'un mode de réalisation représenté à titre d'exemple. La description se réfère aux dessins annexés sur lesquels :
- la figure 1 est une vue en perspective d'une aube à laquelle s'applique l'invention, le profil de l'aube étant seulement représenté sur une partie de sa hauteur ;
- la figure 2 est une vue en coupe du profil de la figure 1, dans un plan X,Y ;
- la figure 3 illustre la relation entre la corde axiale du profil nominal et la coordonnée Z' ;
- la figure 4 illustre la relation entre l'aire intérieure définie par le contour externe du profil nominal dans un plan X,Y et la coordonnée Z' ; et
- la figure 5 illustre la relation entre la coordonnée Z' et l'épaisseur maximum du profil nominal, mesurée dans un plan X,Y.

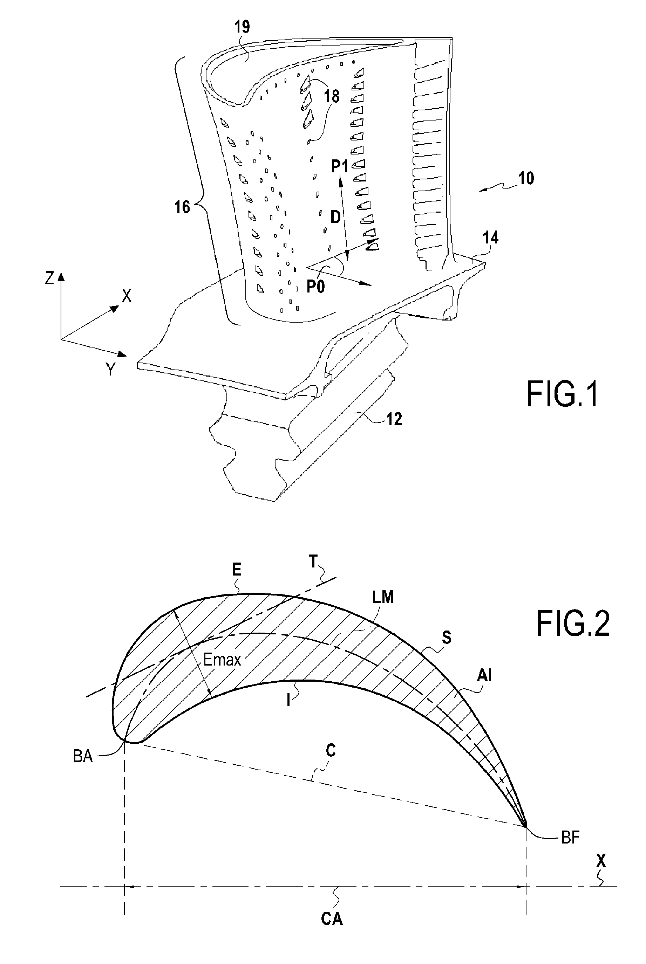

L'aube 10 représentée sur la figure 1 comporte un pied d'aube 12 permettant son raccordement au moyeu d'une roue de turbine, et une plate-forme 14 à partir de laquelle s'étend un profil aérodynamique 16. Par convention, le profil aérodynamique est toute la partie de l'aube qui s'étend radialement vers l'extérieur à partir de la plate-forme 14, jusqu'au sommet de l'aube.

Sur la figure 1, le repère de coordonnées cartésiennes X, Y, Z est indiqué. La direction radiale Z est celle de la hauteur de l'aube, qui s'étend radialement, du pied de l'aube vers le sommet (non représenté) de cette aube. Cette direction Z est perpendiculaire à la direction axiale X, qui est celle de l'axe géométrique de la roue dans laquelle l'aube est destinée à être montée. La direction Y est perpendiculaire au plan X,Z. S'agissant en particulier d'une roue mobile, la direction X est celle de l'axe de rotation de cette roue, tandis que la direction Y est la direction tangentielle à la rotation R de la roue, la direction Z étant radiale.

On voit que le profil est pourvu d'ouvertures 18 qui relient sa surface externe à l'intérieur 19 de ce profil, qui peut être creux, pour permettre son refroidissement par circulation d'air.

Le profil nominal à partir duquel est déterminé le profil aérodynamique de l'invention est défini dans le tableau de coordonnées ci-après, dans lequel la coordonnée Z', prise selon l'axe Z, est adimensionnée et varie donc entre 0 et 1, tandis que les dimensions X et Y, respectivement prises selon les axes X et Y, sont exprimées en millimètres.

**Tableau 1**

| X | Y | Z' | X | Y | Z' | X | Y | Z' |
|---|---|---|---|---|---|---|---|---|
| -12.561 | -3.052 | 0.000 | 15.787 | -15.233 | 0.000 | -11.494 | 1.159 | 0.046 |
| -12.594 | -2.972 | 0.000 | 15.648 | -15.000 | 0.000 | -11.004 | 1.930 | 0.046 |
| -12.630 | -2.851 | 0.000 | 15.480 | -14.713 | 0.000 | -10.387 | 2.724 | 0.046 |
| -12.661 | -2.658 | 0.000 | 15.277 | -14.371 | 0.000 | -9.635 | 3.517 | 0.046 |
| -12.664 | -2.386 | 0.000 | 15.034 | -13.975 | 0.000 | -8.745 | 4.286 | 0.046 |
| -12.620 | -2.034 | 0.000 | 14.747 | -13.528 | 0.000 | -7.718 | 5.009 | 0.046 |
| -12.528 | -1.600 | 0.000 | 14.412 | -13.031 | 0.000 | -6.563 | 5.666 | 0.046 |
| -12.387 | -1.084 | 0.000 | 14.025 | -12.491 | 0.000 | -5.289 | 6.236 | 0.046 |
| -12.185 | -0.488 | 0.000 | 13.582 | -11.910 | 0.000 | -3.909 | 6.697 | 0.046 |
| -11.902 | 0.178 | 0.000 | 13.080 | -11.298 | 0.000 | -2.437 | 7.023 | 0.046 |
| -11.521 | 0.903 | 0.000 | 12.515 | -10.660 | 0.000 | -0.894 | 7.177 | 0.046 |
| -11.023 | 1.667 | 0.000 | 11.886 | -10.007 | 0.000 | 0.690 | 7.097 | 0.046 |
| -10.394 | 2.449 | 0.000 | 11.200 | -9.336 | 0.000 | 2.263 | 6.738 | 0.046 |
| -9.628 | 3.226 | 0.000 | 10.462 | -8.651 | 0.000 | 3.765 | 6.101 | 0.046 |
| -8.721 | 3.973 | 0.000 | 9.657 | -7.978 | 0.000 | 5.150 | 5.221 | 0.046 |
| -7.678 | 4.668 | 0.000 | 8.773 | -7.350 | 0.000 | 6.398 | 4.153 | 0.046 |
| -6.508 | 5.294 | 0.000 | 7.814 | -6.777 | 0.000 | 7.515 | 2.960 | 0.046 |
| -5.224 | 5.834 | 0.000 | 6.800 | -6.252 | 0.000 | 8.513 | 1.689 | 0.046 |
| -3.838 | 6.271 | 0.000 | 5.738 | -5.782 | 0.000 | 9.405 | 0.372 | 0.046 |
| -2.367 | 6.585 | 0.000 | 4.639 | -5.372 | 0.000 | 10.204 | -0.962 | 0.046 |
| -0.827 | 6.747 | 0.000 | 3.510 | -5.026 | 0.000 | 10.922 | -2.293 | 0.046 |
| 0.756 | 6.692 | 0.000 | 2.364 | -4.746 | 0.000 | 11.570 | -3.602 | 0.046 |
| 2.334 | 6.368 | 0.000 | 1.211 | -4.533 | 0.000 | 12.154 | -4.876 | 0.046 |
| 3.848 | 5.766 | 0.000 | 0.061 | -4.386 | 0.000 | 12.684 | -6.103 | 0.046 |
| 5.249 | 4.917 | 0.000 | -1.076 | -4.295 | 0.000 | 13.164 | -7.272 | 0.046 |
| 6.514 | 3.874 | 0.000 | -2.190 | -4.252 | 0.000 | 13.600 | -8.375 | 0.046 |
| 7.648 | 2.701 | 0.000 | -3.272 | -4.255 | 0.000 | 13.995 | -9.405 | 0.046 |
| 8.662 | 1.446 | 0.000 | -4.317 | -4.301 | 0.000 | 14.354 | -10.356 | 0.046 |
| 9.569 | 0.143 | 0.000 | -5.315 | -4.387 | 0.000 | 14.678 | -11.224 | 0.046 |
| 10.381 | -1.181 | 0.000 | -6.263 | -4.498 | 0.000 | 14.986 | -11.998 | 0.046 |
| 11.109 | -2.503 | 0.000 | -7.158 | -4.616 | 0.000 | 15.278 | -12.679 | 0.046 |
| 11.764 | -3.806 | 0.000 | -7.997 | -4.718 | 0.000 | 15.536 | -13.271 | 0.046 |
| 12.354 | -5.075 | 0.000 | -8.780 | -4.771 | 0.000 | 15.753 | -13.781 | 0.046 |
| 12.888 | -6.297 | 0.000 | -9.502 | -4.753 | 0.000 | 15.928 | -14.211 | 0.046 |
| 13.370 | -7.464 | 0.000 | -10.151 | -4.663 | 0.000 | 16.062 | -14.563 | 0.046 |
| 13.806 | -8.565 | 0.000 | -10.721 | -4.514 | 0.000 | 16.161 | -14.842 | 0.046 |
| 14.200 | -9.593 | 0.000 | -11.207 | -4.329 | 0.000 | 16.213 | -15.056 | 0.046 |
| 14.558 | -10.542 | 0.000 | -11.606 | -4.115 | 0.000 | 16.174 | -15.203 | 0.046 |
| 14.881 | -11.409 | 0.000 | -11.916 | -3.888 | 0.000 | 16.112 | -15.277 | 0.046 |
| 15.189 | -12.182 | 0.000 | -12.147 | -3.668 | 0.000 | 16.050 | -15.319 | 0.046 |
| 15.481 | -12.861 | 0.000 | -12.310 | -3.471 | 0.000 | 16.001 | -15.337 | 0.046 |
| 15.740 | -13.453 | 0.000 | -12.420 | -3.310 | 0.000 | 15.933 | -15.348 | 0.046 |
| 15.957 | -13.962 | 0.000 | -12.492 | -3.189 | 0.000 | 15.825 | -15.330 | 0.046 |
| 16.131 | -14.390 | 0.000 | -12.534 | -3.108 | 0.000 | 15.700 | -15.237 | 0.046 |
| 16.266 | -14.742 | 0.000 | -12.446 | -2.811 | 0.046 | 15.584 | -15.061 | 0.046 |
| 16.366 | -15.020 | 0.000 | -12.483 | -2.732 | 0.046 | 15.444 | -14.830 | 0.046 |
| 16.417 | -15.233 | 0.000 | -12.525 | -2.612 | 0.046 | 15.275 | -14.546 | 0.046 |
| 16.378 | -15.380 | 0.000 | -12.565 | -2.421 | 0.046 | 15.072 | -14.207 | 0.046 |
| 16.316 | -15.455 | 0.000 | -12.581 | -2.150 | 0.046 | 14.830 | -13.814 | 0.046 |
| 16.254 | -15.496 | 0.000 | -12.553 | -1.795 | 0.046 | 14.545 | -13.369 | 0.046 |
| 16.205 | -15.515 | 0.000 | -12.475 | -1.358 | 0.046 | 14.213 | -12.875 | 0.046 |
| 16.136 | -15.525 | 0.000 | -12.344 | -0.838 | 0.046 | 13.832 | -12.335 | 0.046 |
| 16.028 | -15.506 | 0.000 | -12.148 | -0.239 | 0.046 | 13.397 | -11.754 | 0.046 |
| 15.903 | -15.411 | 0.000 | -11.871 | 0.431 | 0.046 | 12.907 | -11.139 | 0.046 |
| 12.357 | -10.496 | 0.046 | -0.953 | 7.560 | 0.084 | 3.655 | -4.221 | 0.084 |
| 11.744 | -9.834 | 0.046 | 0.633 | 7.459 | 0.084 | 2.540 | -3.874 | 0.084 |
| 11.078 | -9.151 | 0.046 | 2.202 | 7.073 | 0.084 | 1.413 | -3.599 | 0.084 |
| 10.364 | -8.451 | 0.046 | 3.694 | 6.407 | 0.084 | 0.283 | -3.399 | 0.084 |
| 9.586 | -7.758 | 0.046 | 5.067 | 5.502 | 0.084 | -0.838 | -3.269 | 0.084 |
| 8.730 | -7.101 | 0.046 | 6.301 | 4.415 | 0.084 | -1.938 | -3.202 | 0.084 |
| 7.799 | -6.498 | 0.046 | 7.405 | 3.206 | 0.084 | -3.009 | -3.193 | 0.084 |
| 6.812 | -5.938 | 0.046 | 8.391 | 1.921 | 0.084 | -4.043 | -3.238 | 0.084 |
| 5.776 | -5.430 | 0.046 | 9.272 | 0.594 | 0.084 | -5.030 | -3.328 | 0.084 |
| 4.699 | -4.981 | 0.046 | 10.062 | -0.749 | 0.084 | -5.967 | -3.451 | 0.084 |
| 3.592 | -4.596 | 0.046 | 10.772 | -2.086 | 0.084 | -6.848 | -3.590 | 0.084 |
| 2.463 | -4.279 | 0.046 | 11.413 | -3.401 | 0.084 | -7.673 | -3.727 | 0.084 |
| 1.324 | -4.032 | 0.046 | 11.994 | -4.679 | 0.084 | -8.443 | -3.834 | 0.084 |
| 0.185 | -3.856 | 0.046 | 12.521 | -5.910 | 0.084 | -9.155 | -3.888 | 0.084 |
| -0.942 | -3.743 | 0.046 | 13.000 | -7.081 | 0.084 | -9.804 | -3.876 | 0.084 |
| -2.048 | -3.686 | 0.046 | 13.435 | -8.187 | 0.084 | -10.382 | -3.802 | 0.084 |
| -3.124 | -3.683 | 0.046 | 13.831 | -9.219 | 0.084 | -10.883 | -3.681 | 0.084 |
| -4.162 | -3.729 | 0.046 | 14.191 | -10.171 | 0.084 | -11.301 | -3.524 | 0.084 |
| -5.154 | -3.816 | 0.046 | 14.516 | -11.040 | 0.084 | -11.635 | -3.341 | 0.084 |
| -6.095 | -3.934 | 0.046 | 14.825 | -11.816 | 0.084 | -11.887 | -3.152 | 0.084 |
| -6.982 | -4.065 | 0.046 | 15.117 | -12.498 | 0.084 | -12.069 | -2.976 | 0.084 |
| -7.813 | -4.187 | 0.046 | 15.375 | -13.092 | 0.084 | -12.193 | -2.828 | 0.084 |
| -8.589 | -4.271 | 0.046 | 15.592 | -13.603 | 0.084 | -12.274 | -2.715 | 0.084 |
| -9.306 | -4.294 | 0.046 | 15.766 | -14.033 | 0.084 | -12.322 | -2.639 | 0.084 |
| -9.956 | -4.247 | 0.046 | 15.900 | -14.386 | 0.084 | -12.233 | -2.361 | 0.128 |
| -10.531 | -4.140 | 0.046 | 15.999 | -14.665 | 0.084 | -12.276 | -2.285 | 0.128 |
| -11.026 | -3.989 | 0.046 | 16.051 | -14.880 | 0.084 | -12.328 | -2.169 | 0.128 |
| -11.437 | -3.807 | 0.046 | 16.013 | -15.027 | 0.084 | -12.385 | -1.981 | 0.128 |
| -11.761 | -3.603 | 0.046 | 15.950 | -15.102 | 0.084 | -12.426 | -1.711 | 0.128 |
| -12.003 | -3.400 | 0.046 | 15.889 | -15.143 | 0.084 | -12.428 | -1.354 | 0.128 |
| -12.177 | -3.215 | 0.046 | 15.840 | -15.162 | 0.084 | -12.375 | -0.912 | 0.128 |
| -12.295 | -3.060 | 0.046 | 15.772 | -15.173 | 0.084 | -12.261 | -0.386 | 0.128 |
| -12.371 | -2.944 | 0.046 | 15.664 | -15.155 | 0.084 | -12.076 | 0.219 | 0.128 |
| -12.417 | -2.866 | 0.046 | 15.539 | -15.064 | 0.084 | -11.807 | 0.895 | 0.128 |
| -12.353 | -2.585 | 0.084 | 15.422 | -14.889 | 0.084 | -11.440 | 1.633 | 0.128 |
| -12.393 | -2.508 | 0.084 | 15.283 | -14.660 | 0.084 | -10.966 | 2.418 | 0.128 |
| -12.439 | -2.390 | 0.084 | 15.113 | -14.378 | 0.084 | -10.371 | 3.233 | 0.128 |
| -12.487 | -2.200 | 0.084 | 14.909 | -14.041 | 0.084 | -9.647 | 4.057 | 0.128 |
| -12.514 | -1.929 | 0.084 | 14.667 | -13.651 | 0.084 | -8.787 | 4.868 | 0.128 |
| -12.500 | -1.573 | 0.084 | 14.383 | -13.208 | 0.084 | -7.792 | 5.642 | 0.128 |
| -12.433 | -1.133 | 0.084 | 14.054 | -12.715 | 0.084 | -6.665 | 6.356 | 0.128 |
| -12.310 | -0.610 | 0.084 | 13.677 | -12.176 | 0.084 | -5.411 | 6.981 | 0.128 |
| -12.120 | -0.009 | 0.084 | 13.249 | -11.594 | 0.084 | -4.041 | 7.485 | 0.128 |
| -11.845 | 0.664 | 0.084 | 12.767 | -10.976 | 0.084 | -2.568 | 7.832 | 0.128 |
| -11.473 | 1.396 | 0.084 | 12.228 | -10.328 | 0.084 | -1.018 | 7.971 | 0.128 |
| -10.990 | 2.174 | 0.084 | 11.629 | -9.659 | 0.084 | 0.570 | 7.847 | 0.128 |
| -10.383 | 2.977 | 0.084 | 10.978 | -8.969 | 0.084 | 2.134 | 7.429 | 0.128 |
| -9.643 | 3.784 | 0.084 | 10.282 | -8.256 | 0.084 | 3.615 | 6.730 | 0.128 |
| -8.767 | 4.572 | 0.084 | 9.526 | -7.546 | 0.084 | 4.973 | 5.796 | 0.128 |
| -7.754 | 5.318 | 0.084 | 8.693 | -6.868 | 0.084 | 6.193 | 4.686 | 0.128 |
| -6.611 | 6.001 | 0.084 | 7.784 | -6.240 | 0.084 | 7.281 | 3.459 | 0.128 |
| -5.346 | 6.596 | 0.084 | 6.818 | -5.653 | 0.084 | 8.253 | 2.159 | 0.128 |
| -3.971 | 7.077 | 0.084 | 5.803 | -5.116 | 0.084 | 9.121 | 0.819 | 0.128 |
| -2.499 | 7.412 | 0.084 | 4.745 | -4.636 | 0.084 | 9.900 | -0.534 | 0.128 |
| 10.602 | -1.880 | 0.128 | -6.688 | -3.071 | 0.128 | 14.772 | -12.247 | 0.172 |
| 11.237 | -3.202 | 0.128 | -7.507 | -3.223 | 0.128 | 15.030 | -12.845 | 0.172 |
| 11.813 | -4.486 | 0.128 | -8.268 | -3.356 | 0.128 | 15.247 | -13.359 | 0.172 |
| 12.337 | -5.721 | 0.128 | -8.974 | -3.443 | 0.128 | 15.421 | -13.792 | 0.172 |
| 12.814 | -6.897 | 0.128 | -9.620 | -3.472 | 0.128 | 15.555 | -14.147 | 0.172 |
| 13.250 | -8.005 | 0.128 | -10.199 | -3.439 | 0.128 | 15.654 | -14.428 | 0.172 |
| 13.646 | -9.039 | 0.128 | -10.705 | -3.353 | 0.128 | 15.747 | -14.643 | 0.172 |
| 14.007 | -9.994 | 0.128 | -11.132 | -3.227 | 0.128 | 15.669 | -14.791 | 0.172 |
| 14.333 | -10.865 | 0.128 | -11.476 | -3.069 | 0.128 | 15.607 | 14.866 | 0.172 |
| 14.643 | -11.642 | 0.128 | -11.740 | -2.899 | 0.128 | 15.545 | -14.908 | 0.172 |
| 14.935 | -12.326 | 0.128 | -11.931 | -2.736 | 0.128 | 15.496 | -14.927 | 0.172 |
| 15.193 | -12.921 | 0.128 | -12.063 | -2.595 | 0.128 | 15.429 | -14.938 | 0.172 |
| 15.410 | -13.433 | 0.128 | -12.148 | -2.487 | 0.128 | 15.322 | -14.922 | 0.172 |
| 15.584 | -13.865 | 0.128 | -12.200 | -2.413 | 0.128 | 15.196 | -14.833 | 0.172 |
| 15.718 | -14.220 | 0.128 | -12.095 | -2.231 | 0.172 | 15.479 | 14.661 | 0.172 |
| 15.817 | -14.499 | 0.128 | -12.142 | -2.157 | 0.172 | 14,937 | -14.436 | 0.172 |
| 15.869 | -14.714 | 0.128 | -12.199 | -2.043 | 0.172 | 14,765 | -14.158 | 0.172 |
| 15.831 | -14,862 | 0.128 | -12.266 | -1.858 | 0.172 | 14.560 | -13.826 | 0.172 |
| 16.769 | -14,937 | 0.128 | -12.321 | -1.590 | 0.172 | 14.318 | -13.440 | 0.172 |
| 15.707 | -14,979 | 0.128 | -12.340 | -1.233 | 0.172 | 14.036 | -13.001 | 0.172 |
| 15.658 | -14.997 | 0.128 | -12.301 | -0.788 | 0.172 | 13.712 | -12.511 | 0.172 |
| 15.591 | -15.008 | 0.128 | -12.196 | -0.259 | 0.172 | 13.344 | -11.971 | 0.172 |
| 15.484 | -14.991 | 0.128 | -12.017 | 0.350 | 0.172 | 12.929 | -11.387 | 0.172 |
| 15.358 | -14.901 | 0.128 | -11.753 | 1.030 | 0.172 | 12.466 | -10.762 | 0.172 |
| 15.241 | -14.728 | 0.128 | -11.392 | 1.773 | 0.172 | 11.951 | -10.104 | 0.172 |
| 15.100 | -14.501 | 0.128 | -10.926 | 2.566 | 0.172 | 11.383 | -9.418 | 0.172 |
| 14.929 | -14.221 | 0.128 | -10.344 | 3.394 | 0.172 | 10.767 | -8.705 | 0.172 |
| 14.725 | -13.887 | 0.128 | -9.636 | 4.235 | 0.172 | 10.114 | -7.964 | 0.172 |
| 14.484 | -13.499 | 0.128 | -8.794 | 5.069 | 0.172 | 9.407 | -7.216 | 0.172 |
| 14.201 | -13.058 | 0.128 | -7.818 | 5.872 | 0.172 | 8.626 | -6.490 | 0.172 |
| 13.874 | -12.567 | 0.128 | -6.707 | 6.616 | 0.172 | 7.770 | -5.807 | 0.172 |
| 13.502 | -12.028 | 0.128 | -5.464 | 7.271 | 0.172 | 6.856 | -5.157 | 0.172 |
| 13.081 | -11.445 | 0.128 | -4.099 | 7.800 | 0.172 | 5.891 | -4.551 | 0.172 |
| 12.609 | -10.824 | 0.128 | -2.626 | 8.157 | 0.172 | 4.880 | -3.999 | 0.172 |
| 12.082 | -10.170 | 0.128 | -1.070 | 8.290 | 0.172 | 3.830 | -3.511 | 0.172 |
| 11.499 | -9.493 | 0.128 | 0.519 | 8.142 | 0.172 | 2.750 | -3.094 | 0.172 |
| 10.866 | -8.792 | 0.128 | 2.079 | 7.692 | 0.172 | 1.649 | -2.756 | 0.172 |
| 10.192 | -8.065 | 0.128 | 3.550 | 6.961 | 0.172 | 0.540 | -2.501 | 0.172 |
| 9.460 | -7.336 | 0.128 | 4.893 | 5.999 | 0.172 | -0.566 | -2.329 | 0.172 |
| 8.654 | -6.633 | 0.128 | 6.098 | 4.867 | 0.172 | -1.656 | -2.236 | 0.172 |
| 7.771 | -5.978 | 0.128 | 7.172 | 3.621 | 0.172 | -2.718 | -2.215 | 0.172 |
| 6.831 | -5.359 | 0.128 | 8.129 | 2.305 | 0.172 | -3.743 | -2.257 | 0.172 |
| 5.841 | -4.787 | 0.128 | 8.986 | 0.953 | 0.172 | -4.722 | -2.352 | 0.172 |
| 4.806 | -4.272 | 0.128 | 9.754 | -0.411 | 0.172 | -5.650 | -2.486 | 0.172 |
| 3.735 | -3.820 | 0.128 | 10.447 | -1.766 | 0.172 | -6.521 | -2.645 | 0.172 |
| 2.638 | -3.438 | 0.128 | 11.076 | -3.095 | 0.172 | -7.333 | -2.813 | 0.172 |
| 1.524 | -3.132 | 0.128 | 11.648 | -4.385 | 0.172 | -8.088 | -2.968 | 0.172 |
| 0.405 | -2.904 | 0.128 | 12.169 | -5.625 | 0.172 | -8.787 | -3.088 | 0.172 |
| -0.708 | -2.753 | 0.128 | 12.646 | -6.804 | 0.172 | -9.427 | -3.155 | 0.172 |
| -1.803 | -2.673 | 0.128 | 13.081 | -7.916 | 0.172 | -10.005 | -3.163 | 0.172 |
| -2.869 | -2.658 | 0.128 | 13.479 | -8.953 | 0.172 | -10.514 | -3.114 | 0.172 |
| -3.898 | -2.701 | 0.128 | 13.841 | -9.910 | 0.172 | -10.948 | -3.020 | 0.172 |
| -4.881 | -2.793 | 0.128 | 14.168 | -10.783 | 0.172 | -11.302 | -2.890 | 0.172 |
| -5.812 | -2.922 | 0.128 | 14.479 | -11.562 | 0.172 | -11.576 | -2.739 | 0.172 |
| -11.777 | -2.589 | 0.172 | 15.354 | -14.920 | 0.216 | -12.132 | -0.655 | 0.260 |
| -11.915 | -2.457 | 0.172 | 15.287 | -14.932 | 0.216 | -12.045 | -0.120 | 0.260 |
| -12.006 | -2.353 | 0.172 | 15.180 | -14.916 | 0.216 | -11.877 | 0.496 | 0.260 |
| -12.060 | -2.282 | 0.172 | 15.054 | -14.828 | 0.216 | -11.622 | 1.185 | 0.260 |
| -11.946 | -2.159 | 0.216 | 14.936 | -14.657 | 0.216 | -11.275 | 1.939 | 0.260 |
| -11.996 | -2.086 | 0.216 | 14.793 | -14.434 | 0.216 | -10.828 | 2.750 | 0.260 |
| -12.059 | -1.975 | 0.216 | 14.619 | -14.158 | 0.216 | -10.272 | 3.603 | 0.260 |
| -12.136 | -1.794 | 0.216 | 14.413 | -13.827 | 0.216 | -9.596 | 4.479 | 0.260 |
| -12.206 | -1.528 | 0.216 | 14.171 | -13.442 | 0.216 | -8.791 | 5.359 | 0.260 |
| -12.242 | -1.171 | 0.216 | 13.889 | -13.005 | 0.216 | -7.852 | 6.216 | 0.260 |
| -12.217 | -0.724 | 0.216 | 13.567 | -12.515 | 0.216 | -6.773 | 7.020 | 0.260 |
| -12.121 | -0.191 | 0.216 | 13.202 | -11.976 | 0.216 | -5.552 | 7.731 | 0.260 |
| -11.948 | 0.421 | 0.216 | 12.793 | -11.390 | 0.216 | -4.194 | 8.302 | 0.260 |
| -11.688 | 1.105 | 0.216 | 12.338 | -10.762 | 0.216 | -2.715 | 8.675 | 0.260 |
| -11.333 | 1.853 | 0.216 | 11.834 | -10.097 | 0.216 | -1.149 | 8.787 | 0.260 |
| -10.877 | 2.655 | 0.216 | 11.279 | -9.403 | 0.216 | 0.444 | 8.590 | 0.260 |
| -10.308 | 3.496 | 0.216 | 10.679 | -8.681 | 0.216 | 1.995 | 8.077 | 0.260 |
| -9.616 | 4.355 | 0.216 | 10.045 | -7.926 | 0.216 | 3.444 | 7.283 | 0.260 |
| -8.793 | 5.213 | 0.216 | 9.361 | -7.160 | 0.216 | 4.759 | 6.266 | 0.260 |
| -7.836 | 6.043 | 0.216 | 8.606 | -6.412 | 0.216 | 5.935 | 5.090 | 0.260 |
| -6.741 | 6.819 | 0.216 | 7.775 | -5.701 | 0.216 | 6.982 | 3.808 | 0.260 |
| -5.510 | 7.503 | 0.216 | 6.888 | -5.021 | 0.216 | 7.914 | 2.462 | 0.260 |
| -4.149 | 8.055 | 0.216 | 5.948 | -4.381 | 0.216 | 8.748 | 1.084 | 0.260 |
| -2.674 | 8.422 | 0.216 | 4.961 | -3.793 | 0.216 | 9.499 | -0.301 | 0.260 |
| -1.114 | 8.546 | 0.216 | 3.932 | -3.269 | 0.216 | 10.178 | -1.673 | 0.260 |
| 0.478 | 8.375 | 0.216 | 2.869 | -2.817 | 0.216 | 10.796 | -3.017 | 0.260 |
| 2.033 | 7.894 | 0.216 | 1.782 | -2.446 | 0.216 | 11.361 | -4.319 | 0.260 |
| 3.493 | 7.131 | 0.216 | 0.683 | -2.162 | 0.216 | 11.880 | -5.569 | 0.260 |
| 4.823 | 6.142 | 0.216 | -0.417 | -1.968 | 0.216 | 12.356 | -6.757 | 0.260 |
| 6.013 | 4.987 | 0.216 | -1.502 | -1.861 | 0.216 | 12.793 | -7.876 | 0.260 |
| 7.073 | 3.723 | 0.216 | -2.562 | -1.832 | 0.216 | 13.193 | -8.919 | 0.260 |
| 8.018 | 2.392 | 0.216 | -3.584 | -1.872 | 0.216 | 13.559 | -9.882 | 0.260 |
| 8.862 | 1.027 | 0.216 | -4.561 | -1.969 | 0.216 | 13.889 | -10.759 | 0.260 |
| 9.621 | -0.348 | 0.216 | -5.485 | -2.108 | 0.216 | 14.202 | -11.544 | 0.260 |
| 10.307 | -1.711 | 0.216 | -6.352 | -2.276 | 0.216 | 14.497 | -12.233 | 0.260 |
| 10.930 | -3.048 | 0.216 | -7.160 | -2.458 | 0.216 | 14.756 | -12.834 | 0.260 |
| 11.498 | -4.344 | 0.216 | -7.908 | -2.635 | 0.216 | 14.974 | -13.352 | 0.260 |
| 12.018 | -5.589 | 0.216 | -8.598 | -2.786 | 0.216 | 15.148 | -13.788 | 0.260 |
| 12.494 | -6.773 | 0.216 | -9.232 | -2.891 | 0.216 | 15.282 | -14.145 | 0.260 |
| 12.930 | -7.888 | 0.216 | -9.807 | -2.939 | 0.216 | 15.382 | -14.428 | 0.260 |
| 13.329 | -8.928 | 0.216 | -10.317 | -2.928 | 0.216 | 15.436 | -14.644 | 0.260 |
| 13.693 | -9.887 | 0.216 | -10.755 | -2.867 | 0.216 | 15.399 | -14.794 | 0.260 |
| 14.022 | -10.763 | 0.216 | -11.117 | -2.764 | 0.216 | 15.337 | -14.870 | 0.260 |
| 14.334 | -11.545 | 0.216 | -11.401 | -2.635 | 0.216 | 15.274 | -14.912 | 0.260 |
| 14.627 | -12.232 | 0.216 | -11.611 | -2.499 | 0.216 | 15.226 | -14.931 | 0.260 |
| 14.886 | -12.831 | 0.216 | -11.757 | -2.375 | 0.216 | 15.159 | -14.942 | 0.260 |
| 15.103 | -13.347 | 0.216 | -11.852 | -2.276 | 0.216 | 15.053 | -14.927 | 0.260 |
| 15.277 | -13.781 | 0.216 | -11.909 | -2.208 | 0.216 | 14.926 | -14.840 | 0.260 |
| 15.411 | -14.138 | 0.216 | -11.800 | -2.080 | 0.260 | 14.808 | -14.670 | 0.260 |
| 15.510 | -14.419 | 0.216 | -11.853 | -2.009 | 0.260 | 14.664 | -14.448 | 0.260 |
| 15.564 | -14.635 | 0.216 | -11.922 | -1.901 | 0.260 | 14.489 | -14.173 | 0.260 |
| 15.526 | -14.784 | 0.216 | -12.008 | -1.723 | 0.260 | 14.282 | -13.844 | 0.260 |
| 15.464 | -14.859 | 0.216 | -12.093 | -1.460 | 0.260 | 14.039 | -13.460 | 0.260 |
| 15.402 | -14.902 | 0.216 | -12.144 | -1.104 | 0.260 | 13.757 | -13.023 | 0.260 |
| 13.436 | -12.534 | 0.260 | -6.820 | 7.522 | 0.349 | 7.759 | -5.439 | 0.349 |
| 13.074 | -11.994 | 0.260 | -5.609 | 8.266 | 0.349 | 6.940 | -4.680 | 0.349 |
| 12.669 | -11.406 | 0.260 | -4.249 | 8.853 | 0.349 | 6.068 | -3.953 | 0.349 |
| 12.221 | -10.775 | 0.260 | -2.759 | 9.217 | 0.349 | 5.146 | -3.270 | 0.349 |
| 11.726 | -10.105 | 0.260 | -1.183 | 9.289 | 0.349 | 4.176 | -2.645 | 0.349 |
| 11.182 | -9.404 | 0.260 | 0.411 | 9.029 | 0.349 | 3.163 | -2.092 | 0.349 |
| 10.597 | -8.671 | 0.260 | 1.947 | 8.446 | 0.349 | 2.116 | -1.623 | 0.349 |
| 9.980 | -7.904 | 0.260 | 3.369 | 7.586 | 0.349 | 1.046 | -1.249 | 0.349 |
| 9.317 | -7.122 | 0.260 | 4.653 | 6.514 | 0.349 | -0.035 | -0.978 | 0.349 |
| 8.586 | -6.352 | 0.260 | 5.799 | 5.295 | 0.349 | -1.112 | -0.811 | 0.349 |
| 7.779 | -5.617 | 0.260 | 6.818 | 3.979 | 0.349 | -2.168 | -0.741 | 0.349 |
| 6.916 | -4.908 | 0.260 | 7.726 | 2.605 | 0.349 | -3.190 | -0.756 | 0.349 |
| 6.001 | -4.237 | 0.260 | 8.540 | 1.205 | 0.349 | -4.166 | -0.840 | 0.349 |
| 5.037 | -3.615 | 0.260 | 9.275 | -0.199 | 0.349 | -5.090 | -0.978 | 0.349 |
| 4.028 | -3.055 | 0.260 | 9.942 | -1.587 | 0.349 | -5.953 | -1.156 | 0.349 |
| 2.983 | -2.568 | 0.260 | 10.552 | -2.944 | 0.349 | -6.754 | -1.361 | 0.349 |
| 1.910 | -2.164 | 0.260 | 11.113 | -4.257 | 0.349 | -7.490 | -1.582 | 0.349 |
| 0.820 | -1.851 | 0.260 | 11.629 | -5.516 | 0.349 | -8.162 | -1.798 | 0.349 |
| -0.273 | -1.633 | 0.260 | 12.106 | -6.712 | 0.349 | -8.775 | -1.988 | 0.349 |
| -1.355 | -1.508 | 0.260 | 12.545 | -7.837 | 0.349 | -9.332 | -2.132 | 0.349 |
| -2.413 | -1.469 | 0.260 | 12.949 | -8.886 | 0.349 | -9.834 | -2.218 | 0.349 |
| -3.434 | -1.504 | 0.260 | 13.318 | -9.853 | 0.349 | -10.276 | -2.245 | 0.349 |
| -4.409 | -1.600 | 0.260 | 13.651 | -10.736 | 0.349 | -10.651 | -2.217 | 0.349 |
| -5.331 | -1.742 | 0.260 | 13.967 | -11.524 | 0.349 | -10.954 | -2.146 | 0.349 |
| -6.196 | -1.917 | 0.260 | 14.263 | -12.218 | 0.349 | -11.184 | -2.049 | 0.349 |
| -6.999 | -2.111 | 0.260 | 14.524 | -12.823 | 0.349 | -11.347 | -1.949 | 0.349 |
| -7.742 | -2.306 | 0.260 | 14.742 | -13.343 | 0.349 | -11.455 | -1.864 | 0.349 |
| -8.425 | -2.484 | 0.260 | 14.917 | -13.782 | 0.349 | -11.520 | -1.803 | 0.349 |
| -9.051 | -2.623 | 0.260 | 15.052 | -14.141 | 0.349 | -11.425 | -1.317 | 0.437 |
| -9.621 | -2.709 | 0.260 | 15.152 | -14.426 | 0.349 | -11.487 | -1.253 | 0.437 |
| -10.129 | -2.734 | 0.260 | 15.208 | -14.643 | 0.349 | -11.571 | -1.154 | 0.437 |
| -10.570 | -2.706 | 0.260 | 15.172 | -14.793 | 0.349 | -11.684 | -0.989 | 0.437 |
| -10.939 | -2.631 | 0.260 | 15.110 | -14.870 | 0.349 | -11.806 | -0.739 | 0.437 |
| -11.231 | -2.523 | 0.260 | 15.047 | -14.913 | 0.349 | -11.902 | -0.388 | 0.437 |
| -11.449 | -2.401 | 0.260 | 14.999 | -14.932 | 0.349 | -11.928 | 0.065 | 0.437 |
| -11.601 | -2.286 | 0.260 | 14.932 | -14.943 | 0.349 | -11.866 | 0.609 | 0.437 |
| -11.701 | -2.192 | 0.260 | 14.825 | -14.929 | 0.349 | -11.719 | 1.237 | 0.437 |
| -11.761 | -2.127 | 0.260 | 14.698 | -14.843 | 0.349 | -11.481 | 1.940 | 0.437 |
| -11.562 | -1.759 | 0.349 | 14.578 | -14.674 | 0.349 | -11.153 | 2.713 | 0.437 |
| -11.620 | -1.692 | 0.349 | 14.432 | -14.453 | 0.349 | -10.732 | 3.548 | 0.437 |
| -11.698 | -1.589 | 0.349 | 14.255 | -14.180 | 0.349 | -10.211 | 4.436 | 0.437 |
| -11.800 | -1.418 | 0.349 | 14.045 | -13.852 | 0.349 | -9.575 | 5.356 | 0.437 |
| -11.907 | -1.162 | 0.349 | 13.800 | -13.470 | 0.349 | -8.814 | 6.290 | 0.437 |
| -11.985 | -0.809 | 0.349 | 13.518 | -13.033 | 0.349 | -7.914 | 7.207 | 0.437 |
| -11.995 | -0.358 | 0.349 | 13.197 | -12.543 | 0.349 | -6.860 | 8.067 | 0.437 |
| -11.922 | 0.183 | 0.349 | 12.838 | -12.001 | 0.349 | -5.646 | 8.817 | 0.437 |
| -11.765 | 0.805 | 0.349 | 12.440 | -11.408 | 0.349 | -4.273 | 9.391 | 0.437 |
| -11.520 | 1.502 | 0.349 | 12.001 | -10.770 | 0.349 | -2.767 | 9.717 | 0.437 |
| -11.183 | 2.267 | 0.349 | 11.520 | -10.090 | 0.349 | -1.182 | 9.724 | 0.437 |
| -10.752 | 3.092 | 0.349 | 10.995 | -9.374 | 0.349 | 0.404 | 9.384 | 0.437 |
| -10.217 | 3.965 | 0.349 | 10.432 | -8.624 | 0.349 | 1.916 | 8.720 | 0.437 |
| -9.567 | 4.869 | 0.349 | 9.845 | -7.834 | 0.349 | 3.303 | 7.790 | 0.437 |
| -8.791 | 5.783 | 0.349 | 9.216 | -7.023 | 0.349 | 4.550 | 6.663 | 0.437 |
| -7.878 | 6.679 | 0.349 | 8.524 | -6.218 | 0.349 | 5.662 | 5.402 | 0.437 |
| 6.652 | 4.054 | 0.437 | -2.007 | -0.106 | 0.437 | 12.457 | -8.996 | 0.526 |
| 7.536 | 2.655 | 0.437 | -3.032 | -0.085 | 0.437 | 12.831 | -9.971 | 0.526 |
| 8.331 | 1.235 | 0.437 | -4.014 | -0.142 | 0.437 | 13.171 | -10.860 | 0.526 |
| 9.051 | -0.185 | 0.437 | -4.942 | -0.262 | 0.437 | 13.491 | -11.655 | 0.526 |
| 9.709 | -1.585 | 0.437 | -5.811 | -0.429 | 0.437 | 13.790 | -12.354 | 0.526 |
| 10.313 | -2.953 | 0.437 | -6.615 | -0.633 | 0.437 | 14.053 | -12.964 | 0.526 |
| 10.870 | -4.275 | 0.437 | -7.351 | -0.863 | 0.437 | 14.274 | -13.488 | 0.526 |
| 11.386 | -5.541 | 0.437 | -8.018 | -1.100 | 0.437 | 14.452 | -13.930 | 0.526 |
| 11.863 | -6.744 | 0.437 | -8.623 | -1.322 | 0.437 | 14.589 | -14.292 | 0.526 |
| 12.305 | -7.874 | 0.437 | -9.171 | -1.505 | 0.437 | 14.691 | -14.579 | 0.526 |
| 12.712 | -8.928 | 0.437 | -9.666 | -1.633 | 0.437 | 14.750 | -14.797 | 0.526 |
| 13.084 | -9.899 | 0.437 | -10.104 | -1.700 | 0.437 | 14.715 | -14.949 | 0.526 |
| 13.420 | -10.785 | 0.437 | -10.482 | -1.707 | 0.437 | 14.653 | -15.027 | 0.526 |
| 13.738 | -11.577 | 0.437 | -10.791 | -1.662 | 0.437 | 14.591 | -15.071 | 0.526 |
| 14.036 | -12.274 | 0.437 | -11.029 | -1.583 | 0.437 | 14.542 | -15.090 | 0.526 |
| 14.298 | -12.882 | 0.437 | -11.199 | -1.495 | 0.437 | 14.474 | -15.102 | 0.526 |
| 14.517 | -13.405 | 0.437 | -11.312 | -1.416 | 0.437 | 14.367 | -15.088 | 0.526 |
| 14.694 | -13.845 | 0.437 | -11.380 | -1.359 | 0.437 | 14.238 | -15.002 | 0.526 |
| 14.830 | -14.207 | 0.437 | -11.415 | -0.705 | 0.526 | 14.116 | -14.832 | 0.526 |
| 14.931 | -14.492 | 0.437 | -11.480 | -0.643 | 0.526 | 13.965 | -14.611 | 0.526 |
| 14.988 | -14.710 | 0.437 | -11.567 | -0.546 | 0.526 | 13.782 | -14.338 | 0.526 |
| 14.953 | -14.861 | 0.437 | -11.686 | -0.385 | 0.526 | 13.567 | -14.010 | 0.526 |
| 14.891 | -14.939 | 0.437 | -11.816 | -0.137 | 0.526 | 13.317 | -13.626 | 0.526 |
| 14.828 | -14.982 | 0.437 | -11.922 | 0.212 | 0.526 | 13.030 | -13.187 | 0.526 |
| 14.780 | -15.001 | 0.437 | -11.956 | 0.666 | 0.526 | 12.707 | -12.693 | 0.526 |
| 14.712 | -15.013 | 0.437 | -11.902 | 1.214 | 0.526 | 12.348 | -12.143 | 0.526 |
| 14.605 | -14.998 | 0.437 | -11.761 | 1.845 | 0.526 | 11.952 | -11.541 | 0.526 |
| 14.477 | -14.913 | 0.437 | -11.529 | 2.553 | 0.526 | 11.521 | -10.890 | 0.526 |
| 14.356 | -14.743 | 0.437 | -11.205 | 3.331 | 0.526 | 11.053 | -10.192 | 0.526 |
| 14.208 | -14.523 | 0.437 | -10.790 | 4.173 | 0.526 | 10.547 | -9.453 | 0.526 |
| 14.027 | -14.251 | 0.437 | -10.273 | 5.067 | 0.526 | 10.012 | -8.672 | 0.526 |
| 13.815 | -13.923 | 0.437 | -9.640 | 5.995 | 0.526 | 9.460 | -7.846 | 0.526 |
| 13.568 | -13.540 | 0.437 | -8.879 | 6.935 | 0.526 | 8.875 | -6.993 | 0.526 |
| 13.283 | -13.103 | 0.437 | -7.975 | 7.854 | 0.526 | 8.233 | -6.136 | 0.526 |
| 12.962 | -12.611 | 0.437 | -6.910 | 8.708 | 0.526 | 7.523 | -5.293 | 0.526 |
| 12.604 | -12.066 | 0.437 | -5.677 | 9.437 | 0.526 | 6.766 | -4.458 | 0.526 |
| 12.209 | -11.469 | 0.437 | -4.281 | 9.968 | 0.526 | 5.960 | -3.644 | 0.526 |
| 11.775 | -10.823 | 0.437 | -2.756 | 10.223 | 0.526 | 5.105 | -2.863 | 0.526 |
| 11.303 | -10.134 | 0.437 | -1.167 | 10.137 | 0.526 | 4.201 | -2.130 | 0.526 |
| 10.791 | -9.405 | 0.437 | 0.401 | 9.697 | 0.526 | 3.250 | -1.459 | 0.526 |
| 10.244 | -8.639 | 0.437 | 1.876 | 8.944 | 0.526 | 2.256 | -0.866 | 0.526 |
| 9.678 | 7.829 | 0.437 | 3.219 | 7.940 | 0.526 | 1.228 | -0.365 | 0.526 |
| 9.076 | -6.995 | 0.437 | 4.423 | 6.759 | 0.526 | 0.175 | 0.030 | 0.526 |
| 8.414 | -6.161 | 0.437 | 5.499 | 5.458 | 0.526 | -0.887 | 0.313 | 0.526 |
| 7.681 | -5.346 | 0.437 | 6.458 | 4.080 | 0.526 | -1.941 | 0.486 | 0.526 |
| 6.897 | -4.546 | 0.437 | 7.318 | 2.659 | 0.526 | -2.970 | 0.558 | 0.526 |
| 6.062 | -3.771 | 0.437 | 8.095 | 1.221 | 0.526 | -3.958 | 0.544 | 0.526 |
| 5.176 | -3.035 | 0.437 | 8.803 | -0.211 | 0.526 | -4.896 | 0.459 | 0.526 |
| 4.241 | -2.352 | 0.437 | 9.453 | -1.622 | 0.526 | -5.774 | 0.316 | 0.526 |
| 3.260 | -1.738 | 0.437 | 10.052 | -2.997 | 0.526 | -6.587 | 0.128 | 0.526 |
| 2.239 | -1.206 | 0.437 | 10.608 | -4.326 | 0.526 | -7.329 | -0.095 | 0.526 |
| 1.189 | -0.770 | 0.437 | 11.123 | -5.598 | 0.526 | -7.998 | -0.337 | 0.526 |
| 0.120 | -0.440 | 0.437 | 11.602 | -6.805 | 0.526 | -8.602 | -0.573 | 0.526 |
| -0.951 | -0.220 | 0.437 | 12.047 | -7.940 | 0.526 | -9.145 | -0.778 | 0.526 |
| -9.636 | -0.932 | 0.526 | 14.554 | -14.891 | 0.614 | -11.748 | 1.217 | 0.702 |
| -10.072 | -1.024 | 0.526 | 14.520 | -15.044 | 0.614 | -11.865 | 1.381 | 0.702 |
| -10.451 | -1.053 | 0.526 | 14.458 | -15.122 | 0.614 | -11.990 | 1.633 | 0.702 |
| -10.764 | -1.024 | 0.526 | 14.395 | -15.166 | 0.614 | -12.087 | 1.987 | 0.702 |
| -11.006 | -0.956 | 0.526 | 14.346 | -15.186 | 0.614 | -12.116 | 2.444 | 0.702 |
| -11.181 | -0.874 | 0.526 | 14.278 | -15.198 | 0.614 | -12.065 | 2.996 | 0.702 |
| -11.297 | -0.800 | 0.526 | 14.170 | -15.183 | 0.614 | -11.928 | 3.632 | 0.702 |
| -11.368 | -0.745 | 0.526 | 14.040 | -15.097 | 0.614 | -11.698 | 4.346 | 0.702 |
| -11.471 | 0.092 | 0.614 | 13.917 | -14.926 | 0.614 | -11.373 | 5.129 | 0.702 |
| -11.537 | 0.153 | 0.614 | 13.764 | -14.704 | 0.614 | -10.948 | 5.972 | 0.702 |
| -11.626 | 0.248 | 0.614 | 13.579 | -14.430 | 0.614 | -10.411 | 6.862 | 0.702 |
| -11.746 | 0.410 | 0.614 | 13.361 | -14.100 | 0.614 | -9.746 | 7.775 | 0.702 |
| -11.878 | 0.657 | 0.614 | 13.108 | -13.714 | 0.614 | -8.940 | 8.686 | 0.702 |
| -11.984 | 1.008 | 0.614 | 12.818 | -13.272 | 0.614 | -7.975 | 9.554 | 0.702 |
| -12.019 | 1.463 | 0.614 | 12.492 | -12.774 | 0.614 | -6.838 | 10.323 | 0.702 |
| -11.969 | 2.013 | 0.614 | 12.129 | -12.221 | 0.614 | -5.526 | 10.920 | 0.702 |
| -11.831 | 2.647 | 0.614 | 11.732 | -11.615 | 0.614 | -4.064 | 11.262 | 0.702 |
| -11.602 | 3.358 | 0.614 | 11.299 | -10.957 | 0.614 | -2.509 | 11.274 | 0.702 |
| -11.280 | 4.140 | 0.614 | 10.830 | -10.252 | 0.614 | -0.947 | 10.922 | 0.702 |
| -10.863 | 4.984 | 0.614 | 10.326 | -9.504 | 0.614 | 0.542 | 10.238 | 0.702 |
| -10.341 | 5.879 | 0.614 | 9.795 | -8.712 | 0.614 | 1.911 | 9.285 | 0.702 |
| -9.699 | 6.804 | 0.614 | 9.250 | -7.873 | 0.614 | 3.145 | 8.134 | 0.702 |
| -8.923 | 7.737 | 0.614 | 8.673 | -7.005 | 0.614 | 4.251 | 6.847 | 0.702 |
| -7.997 | 8.640 | 0.614 | 8.042 | -6.130 | 0.614 | 5.247 | 5.471 | 0.702 |
| -6.904 | 9.464 | 0.614 | 7.347 | -5.265 | 0.614 | 6.146 | 4.041 | 0.702 |
| -5.637 | 10.143 | 0.614 | 6.608 | -4.403 | 0.614 | 6.963 | 2.583 | 0.702 |
| -4.210 | 10.597 | 0.614 | 5.823 | -3.557 | 0.614 | 7.711 | 1.119 | 0.702 |
| -2.667 | 10.747 | 0.614 | 4.992 | -2.738 | 0.614 | 8.401 | -0.333 | 0.702 |
| -1.085 | 10.540 | 0.614 | 4.114 | -1.961 | 0.614 | 9.042 | -1.759 | 0.702 |
| 0.452 | 9.984 | 0.614 | 3.190 | -1.239 | 0.614 | 9.639 | -3.145 | 0.702 |
| 1.879 | 9.133 | 0.614 | 2.223 | -0.588 | 0.614 | 10.196 | -4.483 | 0.702 |
| 3.171 | 8.055 | 0.614 | 1.219 | -0.022 | 0.614 | 10.716 | -5.762 | 0.702 |
| 4.327 | 6.820 | 0.614 | 0.187 | 0.444 | 0.614 | 11.201 | -6.976 | 0.702 |
| 5.363 | 5.481 | 0.614 | -0.862 | 0.800 | 0.614 | 11.652 | -8.116 | 0.702 |
| 6.292 | 4.075 | 0.614 | -1.909 | 1.046 | 0.614 | 12.068 | -9.177 | 0.702 |
| 7.129 | 2.635 | 0.614 | -2.938 | 1.187 | 0.614 | 12.448 | -10.157 | 0.702 |
| 7.890 | 1.183 | 0.614 | -3.933 | 1.233 | 0.614 | 12.793 | -11.050 | 0.702 |
| 8.588 | -0.260 | 0.614 | -4.881 | 1.198 | 0.614 | 13.118 | -11.848 | 0.702 |
| 9.232 | -1.678 | 0.614 | -5.771 | 1.096 | 0.614 | 13.420 | -12.551 | 0.702 |
| 9.829 | -3.060 | 0.614 | -6.597 | 0.940 | 0.614 | 13.687 | -13.164 | 0.702 |
| 10.384 | -4.394 | 0.614 | -7.351 | 0.739 | 0.614 | 13.912 | -13.691 | 0.702 |
| 10.901 | -5.670 | 0.614 | -8.031 | 0.509 | 0.614 | 14.093 | -14.134 | 0.702 |
| 11.382 | -6.880 | 0.614 | -8.640 | 0.276 | 0.614 | 14.234 | -14.498 | 0.702 |
| 11.829 | -8.017 | 0.614 | -9.186 | 0.066 | 0.614 | 14.339 | -14.785 | 0.702 |
| 12.242 | -9.077 | 0.614 | -9.677 | -0.099 | 0.614 | 14.400 | -15.004 | 0.702 |
| 12.620 | -10.054 | 0.614 | -10.114 | -0.204 | 0.614 | 14.367 | -15.158 | 0.702 |
| 12.962 | -10.945 | 0.614 | -10.494 | -0.242 | 0.614 | 14.305 | -15.237 | 0.702 |
| 13.284 | -11.741 | 0.614 | -10.810 | -0.219 | 0.614 | 14.242 | -15.281 | 0.702 |
| 13.585 | -12.442 | 0.614 | -11.055 | -0.155 | 0.614 | 14.193 | -15.301 | 0.702 |
| 13.850 | -13.054 | 0.614 | -11.232 | -0.075 | 0.614 | 14.124 | -15.313 | 0.702 |
| 14.072 | -13.580 | 0.614 | -11.351 | -0.002 | 0.614 | 14.015 | -15.298 | 0.702 |
| 14.251 | -14.023 | 0.614 | -11.424 | 0.052 | 0.614 | 13.885 | -15.210 | 0.702 |
| 14.390 | -14.386 | 0.614 | -11.594 | 1.059 | 0.702 | 13.760 | -15.037 | 0.702 |
| 14.494 | -14.672 | 0.614 | -11.660 | 1.120 | 0.702 | 13.606 | -14.813 | 0.702 |
| 13.418 | -14.537 | 0.702 | -10.493 | 8.014 | 0.791 | 9.394 | -8.840 | 0.791 |
| 13.197 | -14.205 | 0.702 | -9.792 | 8.906 | 0.791 | 8.840 | -7.981 | 0.791 |
| 12.940 | -13.816 | 0.702 | -8.940 | 9.781 | 0.791 | 8.253 | -7.092 | 0.791 |
| 12.647 | -13.371 | 0.702 | -7.921 | 10.593 | 0.791 | 7.609 | -6.197 | 0.791 |
| 12.317 | -12.869 | 0.702 | -6.726 | 11.279 | 0.791 | 6.912 | -5.302 | 0.791 |
| 11.950 | -12.312 | 0.702 | -5.363 | 11.761 | 0.791 | 6.179 | -4.404 | 0.791 |
| 11.547 | -11.700 | 0.702 | -3.868 | 11.957 | 0.791 | 5.407 | -3.512 | 0.791 |
| 11.108 | -11.037 | 0.702 | -2.314 | 11.803 | 0.791 | 4.598 | -2.636 | 0.791 |
| 10.635 | -10.326 | 0.702 | -0.790 | 11.290 | 0.791 | 3.752 | -1.788 | 0.791 |
| 10.127 | -9.570 | 0.702 | 0.638 | 10.471 | 0.791 | 2.868 | -0.979 | 0.791 |
| 9.594 | -8.769 | 0.702 | 1.939 | 9.418 | 0.791 | 1.950 | -0.220 | 0.791 |
| 9.048 | -7.919 | 0.702 | 3.112 | 8.194 | 0.791 | 0.999 | 0.474 | 0.791 |
| 8.472 | -7.039 | 0.702 | 4.169 | 6.857 | 0.791 | 0.019 | 1.091 | 0.791 |
| 7.840 | -6.151 | 0.702 | 5.127 | 5.446 | 0.791 | -0.983 | 1.617 | 0.791 |
| 7.149 | -5.269 | 0.702 | 5.999 | 3.991 | 0.791 | -1.996 | 2.043 | 0.791 |
| 6.418 | -4.387 | 0.702 | 6.799 | 2.516 | 0.791 | -3.008 | 2.362 | 0.791 |
| 5.646 | -3.515 | 0.702 | 7.538 | 1.040 | 0.791 | -4.003 | 2.576 | 0.791 |
| 4.830 | -2.665 | 0.702 | 8.225 | -0.421 | 0.791 | -4.965 | 2.691 | 0.791 |
| 3.972 | -1.850 | 0.702 | 8.867 | -1.853 | 0.791 | -5.881 | 2.719 | 0.791 |
| 3.071 | -1.083 | 0.702 | 9.467 | -3.245 | 0.791 | -6.738 | 2.673 | 0.791 |
| 2.130 | -0.377 | 0.702 | 10.028 | -4.587 | 0.791 | -7.528 | 2.569 | 0.791 |
| 1.152 | 0.254 | 0.702 | 10.553 | -5.871 | 0.791 | -8.246 | 2.419 | 0.791 |
| 0.144 | 0.794 | 0.702 | 11.043 | -7.087 | 0.791 | -8.889 | 2.245 | 0.791 |
| -0.884 | 1.233 | 0.702 | 11.499 | -8.231 | 0.791 | -9.462 | 2.072 | 0.791 |
| -1.918 | 1.564 | 0.702 | 11.919 | -9.296 | 0.791 | -9.970 | 1.926 | 0.791 |
| -2.942 | 1.788 | 0.702 | 12.303 | -10.279 | 0.791 | -10.420 | 1.831 | 0.791 |
| -3.940 | 1.911 | 0.702 | 12.651 | -11.175 | 0.791 | -10.809 | 1.807 | 0.791 |
| -4.897 | 1.944 | 0.702 | 12.970 | -11.976 | 0.791 | -11.130 | 1.848 | 0.791 |
| -5.800 | 1.899 | 0.702 | 13.283 | -12.681 | 0.791 | -11.377 | 1.927 | 0.791 |
| -6.641 | 1.790 | 0.702 | 13.552 | -13.296 | 0.791 | -11.554 | 2.017 | 0.791 |
| -7.412 | 1.629 | 0.702 | 13.779 | -13.824 | 0.791 | -11.673 | 2.095 | 0.791 |
| -8.109 | 1.430 | 0.702 | 13.963 | -14.269 | 0.791 | -11.746 | 2.152 | 0.791 |
| -8.732 | 1.217 | 0.702 | 14.106 | -14.633 | 0.791 | -11.920 | 2.818 | 0.835 |
| -9.288 | 1.018 | 0.702 | 14.214 | -14.920 | 0.791 | -11.984 | 2.882 | 0.835 |
| -9.785 | 0.855 | 0.702 | 14.277 | -15.140 | 0.791 | -12.068 | 2.984 | 0.835 |
| -10.226 | 0.749 | 0.702 | 14.245 | -15.294 | 0.791 | -12.173 | 3.158 | 0.835 |
| -10.610 | 0.712 | 0.702 | 14.183 | -15.374 | 0.791 | -12.274 | 3.422 | 0.835 |
| -10.928 | 0.740 | 0.702 | 14.120 | -15.419 | 0.791 | -12.340 | 3.786 | 0.835 |
| -11.175 | 0.808 | 0.702 | 14.070 | -15.439 | 0.791 | -12.346 | 4.248 | 0.835 |
| -11.353 | 0.890 | 0.702 | 14.001 | -15.452 | 0.791 | -12.284 | 4.802 | 0.835 |
| -11.472 | 0.964 | 0.702 | 13.890 | -15.436 | 0.791 | -12.141 | 5.442 | 0.835 |
| -11.546 | 1.019 | 0.702 | 13.759 | -15.345 | 0.791 | -11.906 | 6.159 | 0.835 |
| -11.794 | 2.193 | 0.791 | 13.633 | -15.170 | 0.791 | -11.568 | 6.942 | 0.835 |
| -11.859 | 2.256 | 0.791 | 13.477 | -14.944 | 0.791 | -11.116 | 7.779 | 0.835 |
| -11.944 | 2.356 | 0.791 | 13.287 | -14.664 | 0.791 | -10.535 | 8.650 | 0.835 |
| -12.055 | 2.526 | 0.791 | 13.063 | -14.328 | 0.791 | -9.811 | 9.527 | 0.835 |
| -12.166 | 2.785 | 0.791 | 12.802 | -13.935 | 0.791 | -8.930 | 10.377 | 0.835 |
| -12.244 | 3.146 | 0.791 | 12.505 | -13.485 | 0.791 | -7.879 | 11.153 | 0.835 |
| -12.260 | 3.606 | 0.791 | 12.169 | -12.978 | 0.791 | -6.651 | 11.786 | 0.835 |
| -12.203 | 4.159 | 0.791 | 11.794 | -12.415 | 0.791 | -5.261 | 12.200 | 0.835 |
| -12.063 | 4.797 | 0.791 | 11.383 | -11.799 | 0.791 | -3.753 | 12.312 | 0.835 |
| -11.830 | 5.513 | 0.791 | 10.936 | -11.130 | 0.791 | -2.207 | 12.067 | 0.835 |
| -11,497 | 6.297 | 0.791 | 10.453 | -10.412 | 0.791 | -0.709 | 11.470 | 0.835 |
| -11.056 | 7.136 | 0.791 | 9.935 | -9.650 | 0.791 | 0.684 | 10.584 | 0.835 |
| 1.950 | 9.479 | 0.835 | 1.825 | -0.163 | 0.835 | 9.314 | -3.360 | 0.879 |
| 3.091 | 8.221 | 0.835 | 0.886 | 0.563 | 0.835 | 9.883 | -4.709 | 0.879 |
| 4.124 | 6.858 | 0.835 | -0.078 | 1.219 | 0.835 | 10.416 | -5.999 | 0.879 |
| 5.064 | 5.430 | 0.835 | -1.065 | 1.791 | 0.835 | 10.913 | -7.222 | 0.879 |
| 5.925 | 3.962 | 0.835 | -2.065 | 2.266 | 0.835 | 11.376 | -8.371 | 0.879 |
| 6.718 | 2.478 | 0.835 | -3.068 | 2.637 | 0.835 | 11.802 | -9.442 | 0.879 |
| 7.454 | 0.995 | 0.835 | -4.059 | 2.901 | 0.835 | 12.190 | -10.430 | 0.879 |
| 8.142 | -0.470 | 0.835 | -5.022 | 3.061 | 0.835 | 12.542 | -11.331 | 0.879 |
| 8.785 | -1.906 | 0.835 | -5.942 | 3.129 | 0.835 | 12.872 | -12.137 | 0.879 |
| 9.388 | -3.302 | 0.835 | -6.806 | 3.121 | 0.835 | 13.181 | -12.846 | 0.879 |
| 9.953 | -4.647 | 0.835 | -7.607 | 3.051 | 0.835 | 13.453 | -13.464 | 0.879 |
| 10.482 | -5.933 | 0.835 | -8.336 | 2.933 | 0.835 | 13.684 | -13.995 | 0.879 |
| 10.975 | -7.152 | 0.835 | -8.991 | 2.785 | 0.835 | 13.871 | -14.442 | 0.879 |
| 11.434 | -8.298 | 0.835 | -9.574 | 2.632 | 0.835 | 14.017 | -14.807 | 0.879 |
| 11.857 | -9.366 | 0.835 | -10.090 | 2.500 | 0.835 | 14.128 | -15.096 | 0.879 |
| 12.243 | -10.351 | 0.835 | -10.545 | 2.414 | 0.835 | 14.193 | -15.316 | 0.879 |
| 12.592 | -11.249 | 0.835 | -10.938 | 2.401 | 0.835 | 14.161 | -15.472 | 0.879 |
| 12.921 | -12.052 | 0.835 | -11.260 | 2.453 | 0.835 | 14.100 | -15.553 | 0.879 |
| 13.228 | -12.759 | 0.835 | -11.506 | 2.540 | 0.835 | 14.037 | -15.598 | 0.879 |
| 13.499 | -13.375 | 0.835 | -11.682 | 2.635 | 0.835 | 13.986 | -15.619 | 0.879 |
| 13.727 | -13.905 | 0.835 | -11.800 | 2.717 | 0.835 | 13.916 | -15.631 | 0.879 |
| 13.912 | -14.350 | 0.835 | -11.872 | 2.775 | 0.835 | 13.803 | -15.614 | 0.879 |
| 14.057 | -14.715 | 0.835 | -11.920 | 2.818 | 0.835 | 13.671 | -15.521 | 0.879 |
| 14.166 | -15.003 | 0.835 | -12.058 | 3.468 | 0.879 | 13.544 | -15.342 | 0.879 |
| 14.230 | -15.223 | 0.835 | -12.121 | 3.533 | 0.879 | 13.386 | -15.112 | 0.879 |
| 14.198 | -15.378 | 0.835 | -12.202 | 3.638 | 0.879 | 13.194 | -14.827 | 0.879 |
| 14.137 | -15.458 | 0.835 | -12.300 | 3.817 | 0.879 | 12.966 | -14.486 | 0.879 |
| 14.074 | -15.503 | 0.835 | -12.390 | 4.086 | 0.879 | 12.701 | -14.087 | 0.879 |
| 14.024 | -15.523 | 0.835 | -12.442 | 4.454 | 0.879 | 12.397 | -13.630 | 0.879 |
| 13.954 | -15.536 | 0.835 | -12.438 | 4.917 | 0.879 | 12.054 | -13.116 | 0.879 |
| 13.842 | -15.520 | 0.835 | -12.371 | 5.473 | 0.879 | 11.670 | -12.547 | 0.879 |
| 13.711 | -15.428 | 0.835 | -12.225 | 6.115 | 0.879 | 11.247 | -11.924 | 0.879 |
| 13.584 | -15.251 | 0.835 | -11.985 | 6.833 | 0.879 | 10.786 | -11.248 | 0.879 |
| 13.427 | -15.023 | 0.835 | -11.640 | 7.617 | 0.879 | 10.288 | -10.524 | 0.879 |
| 13.236 | -14.741 | 0.835 | -11.176 | 8.451 | 0.879 | 9.753 | -9.756 | 0.879 |
| 13.010 | -14.402 | 0.835 | -10.576 | 9.312 | 0.879 | 9.197 | -8.936 | 0.879 |
| 12.747 | -14.007 | 0.835 | -9.826 | 10.173 | 0.879 | 8.626 | -8.069 | 0.879 |
| 12.447 | -13.553 | 0.835 | -8.913 | 10.996 | 0.879 | 8.018 | -7.174 | 0.879 |
| 12.107 | -13.043 | 0.835 | -7.827 | 11.730 | 0.879 | 7.351 | -6.274 | 0.879 |
| 11.729 | -12.478 | 0.835 | -6.566 | 12.306 | 0.879 | 6.637 | -5.369 | 0.879 |
| 11.312 | -11.858 | 0.835 | -5.150 | 12.645 | 0.879 | 5.888 | -4.458 | 0.879 |
| 10.859 | -11.186 | 0.835 | -3.633 | 12.669 | 0.879 | 5.107 | -3.550 | 0.879 |
| 10.369 | -10.465 | 0.835 | -2.098 | 12.333 | 0.879 | 4.294 | -2.652 | 0.879 |
| 9.843 | -9.700 | 0.835 | -0.630 | 11.652 | 0.879 | 3.450 | -1.774 | 0.879 |
| 9.295 | -8.885 | 0.835 | 0.725 | 10.698 | 0.879 | 2.578 | -0.925 | 0.879 |
| 8.733 | -8.022 | 0.835 | 1.954 | 9.544 | 0.879 | 1.678 | -0.115 | 0.879 |
| 8.137 | -7.130 | 0.835 | 3.065 | 8.250 | 0.879 | 0.752 | 0.643 | 0.879 |
| 7.483 | -6.232 | 0.835 | 4.074 | 6.862 | 0.879 | -0.197 | 1.339 | 0.879 |
| 6.779 | -5.332 | 0.835 | 4.998 | 5.416 | 0.879 | -1.167 | 1.957 | 0.879 |
| 6.040 | -4.427 | 0.835 | 5.848 | 3.935 | 0.879 | -2.152 | 2.483 | 0.879 |
| 5.265 | -3.527 | 0.835 | 6.636 | 2.441 | 0.879 | -3.144 | 2.906 | 0.879 |
| 4.455 | -2.640 | 0.835 | 7.371 | 0.951 | 0.879 | -4.129 | 3.220 | 0.879 |
| 3.611 | -1.776 | 0.835 | 8.060 | -0.520 | 0.879 | -5.092 | 3.427 | 0.879 |
| 2.733 | -0.947 | 0.835 | 8.707 | -1.961 | 0.879 | -6.016 | 3.538 | 0.879 |
| -6.887 | 3.569 | 0.879 | 13.412 | -13.560 | 0.923 | -11.961 | 3.920 | 0.923 |
| -7.697 | 3.537 | 0.879 | 13.644 | -14.093 | 0.923 | -12.077 | 4.009 | 0.923 |
| -8.437 | 3.453 | 0.879 | 13.833 | -14.542 | 0.923 | -12.149 | 4.071 | 0.923 |
| -9.104 | 3.335 | 0.879 | 13.982 | -14.908 | 0.923 | -12.329 | 4.753 | 0.968 |
| -9.698 | 3.206 | 0.879 | 14.094 | -15.198 | 0.923 | -12.390 | 4.822 | 0.968 |
| -10.223 | 3.090 | 0.879 | 14.160 | -15.419 | 0.923 | -12.465 | 4.932 | 0.968 |
| -10.684 | 3.016 | 0.879 | 14.129 | -15.576 | 0.923 | -12.550 | 5.120 | 0.968 |
| -11.080 | 3.016 | 0.879 | 14.068 | -15.657 | 0.923 | -12.617 | 5.399 | 0.968 |
| -11.402 | 3.081 | 0.879 | 14.005 | -15.702 | 0.923 | -12.641 | 5.773 | 0.968 |
| -11.647 | 3.177 | 0.879 | 13.954 | -15.723 | 0.923 | -12.615 | 6.241 | 0.968 |
| -11.822 | 3.279 | 0.879 | 13.882 | -15.736 | 0.923 | -12.537 | 6.800 | 0.968 |
| -11.939 | 3.364 | 0.879 | 13.769 | -15.718 | 0.923 | -12.384 | 7.447 | 0.968 |
| -12.011 | 3.424 | 0.879 | 13.636 | -15.623 | 0.923 | -12.136 | 8.171 | 0.968 |
| -12.196 | 4.116 | 0.923 | 13.509 | -15.442 | 0.923 | -11.776 | 8.957 | 0.968 |
| -12.258 | 4.184 | 0.923 | 13.349 | -15.210 | 0.923 | -11.284 | 9.785 | 0.968 |
| -12.336 | 4.291 | 0.923 | 13.155 | -14.922 | 0.923 | -10.642 | 10.629 | 0.968 |
| -12.428 | 4.474 | 0.923 | 12.926 | -14.577 | 0.923 | -9.838 | 11.454 | 0.968 |
| -12.506 | 4.749 | 0.923 | 12.658 | -14.175 | 0.923 | -8.862 | 12.220 | 0.968 |
| -12.543 | 5.120 | 0.923 | 12.351 | -13.713 | 0.923 | -7.708 | 12.867 | 0.968 |
| -12.529 | 5.585 | 0.923 | 12.003 | -13.196 | 0.923 | -6.385 | 13.325 | 0.968 |
| -12.456 | 6.143 | 0.923 | 11.614 | -12.623 | 0.923 | 4.928 | 13.516 | 0.968 |
| -12.306 | 6.786 | 0.923 | 11.185 | -11.995 | 0.923 | -3.402 | 13.372 | 0.968 |
| -12.063 | 7.507 | 0.923 | 10.716 | -11.316 | 0.923 | -1.898 | 12.866 | 0.968 |
| -11.710 | 8.292 | 0.923 | 10.209 | -10.588 | 0.923 | -0.493 | 12.032 | 0.968 |
| -11.232 | 9.123 | 0.923 | 9.664 | -9.816 | 0.923 | 0.786 | 10.952 | 0.968 |
| -10.612 | 9.976 | 0.923 | 9.099 | -8.991 | 0.923 | 1.942 | 9.702 | 0.968 |
| -9.835 | 10.818 | 0.923 | 8.517 | -8.120 | 0.923 | 2.993 | 8.337 | 0.968 |
| -8.890 | 11.613 | 0.923 | 7.895 | -7.221 | 0.923 | 3.957 | 6.897 | 0.968 |
| -7.770 | 12.304 | 0.923 | 7.214 | -6.318 | 0.923 | 4.849 | 5.412 | 0.968 |
| -6.477 | 12.821 | 0.923 | 6.489 | -5.409 | 0.923 | 5.681 | 3.902 | 0.968 |
| -5.039 | 13.085 | 0.923 | 5.731 | -4.492 | 0.923 | 6.461 | 2.385 | 0.968 |
| -3.516 | 13.023 | 0.923 | 4.942 | -3.575 | 0.923 | 7.196 | 0.877 | 0.968 |
| -1.996 | 12.599 | 0.923 | 4.124 | -2.667 | 0.923 | 7.891 | -0.609 | 0.968 |
| -0.558 | 11.839 | 0.923 | 3.280 | -1.773 | 0.923 | 8.546 | -2.063 | 0.968 |
| 0.759 | 10.821 | 0.923 | 2.411 | -0.904 | 0.923 | 9.164 | -3.474 | 0.968 |
| 1.951 | 9.619 | 0.923 | 1.520 | -0.068 | 0.923 | 9.745 | -4.834 | 0.968 |
| 3.032 | 8.289 | 0.923 | 0.607 | 0.724 | 0.923 | 10.288 | -6.134 | 0.968 |
| 4.018 | 6.875 | 0.923 | -0.326 | 1.459 | 0.923 | 10.795 | -7.367 | 0.968 |
| 4.926 | 5.410 | 0.923 | -1.278 | 2.122 | 0.923 | 11.265 | -8.526 | 0.968 |
| 5.767 | 3.915 | 0.923 | -2.247 | 2.698 | 0.923 | 11.698 | -9.606 | 0.968 |
| 6.550 | 2.410 | 0.923 | -3.227 | 3.172 | 0.923 | 12.092 | -10.603 | 0.968 |
| 7.285 | 0.912 | 0.923 | -4.206 | 3.535 | 0.923 | 12.449 | -11.513 | 0.968 |
| 7.976 | -0.566 | 0.923 | -5.167 | 3.788 | 0.923 | 12.784 | -12.326 | 0.968 |
| 8.627 | -2.013 | 0.923 | -6.094 | 3.942 | 0.923 | 13.097 | -13.041 | 0.968 |
| 9.240 | -3.418 | 0.923 | -6.971 | 4.011 | 0.923 | 13.373 | -13.665 | 0.968 |
| 9.314 | -4.771 | 0.923 | -7.789 | 4.016 | 0.923 | 13.608 | -14.200 | 0.968 |
| 10.352 | -6.066 | 0.923 | -8.539 | 3.967 | 0.923 | 13.799 | -14.650 | 0.968 |
| 10.854 | -7.293 | 0.923 | -9.217 | 3.880 | 0.923 | 13.949 | -15.018 | 0.968 |
| 11.320 | 8.447 | 0.923 | -9.822 | 3.775 | 0.923 | 14.063 | -15.309 | 0.968 |
| 11.749 | -9.522 | 0.923 | -10.355 | 3.676 | 0.923 | 14.130 | -15.531 | 0.968 |
| 12.140 | -10.514 | 0.923 | -10.822 | 3.616 | 0.923 | 14.101 | -15.689 | 0.968 |
| 12.494 | -11.419 | 0.923 | -11.223 | 3.629 | 0.923 | 14.039 | -15.770 | 0.968 |
| 12.827 | -12.228 | 0.923 | -11.545 | 3.706 | 0.923 | 13.976 | -15.816 | 0.968 |
| 13.138 | -12.940 | 0.923 | -11.789 | 3.812 | 0.923 | 13.924 | -15.838 | 0.968 |
| 13.852 | -15.851 | 0.968 | -12.596 | 7.270 | 1.000 | 11.520 | -12.772 | 1.000 |
| 13.738 | -15.832 | 0.968 | -12.441 | 7.920 | 1.000 | 11.078 | -12.136 | 1.000 |
| 13.605 | -15.734 | 0.968 | -12.191 | 8.646 | 1.000 | 10.595 | -11.449 | 1.000 |
| 13.476 | -15.552 | 0.968 | -11.825 | 9.434 | 1.000 | 10.072 | -10.713 | 1.000 |
| 13.315 | -15.316 | 0.968 | -11.323 | 10.261 | 1.000 | 9.509 | -9.932 | 1.000 |
| 13.120 | -15.026 | 0.968 | -10.667 | 11.100 | 1.000 | 8.929 | -9.097 | 1.000 |
| 12.888 | -14.677 | 0.968 | -9.842 | 11.912 | 1.000 | 8.326 | -8.216 | 1.000 |
| 12.617 | -14.271 | 0.968 | -8.843 | 12.657 | 1.000 | 7.679 | -7.311 | 1.000 |
| 12.307 | -13.805 | 0.968 | -7.665 | 13.273 | 1.000 | 6.971 | -6.403 | 1.000 |
| 11.955 | -13.283 | 0.968 | -6.322 | 13.689 | 1.000 | 6.225 | -5.484 | 1.000 |
| 11.559 | -12.705 | 0.968 | -4.852 | 13.828 | 1.000 | 5.449 | -4.554 | 1.000 |
| 11.123 | -12.074 | 0.968 | -3.326 | 13.628 | 1.000 | 4.645 | -3.621 | 1.000 |
| 10.646 | -11.390 | 0.968 | -1.835 | 13.065 | 1.000 | 3.818 | -2.691 | 1.000 |
| 10.130 | -10.658 | 0.968 | -0.452 | 12.180 | 1.000 | 2.973 | -1.769 | 1.000 |
| 9.575 | -9.880 | 0.968 | 0.800 | 11.057 | 1.000 | 2.111 | -0.861 | 1.000 |
| 9.001 | -9.050 | 0.968 | 1.930 | 9.773 | 1.000 | 1.236 | 0.022 | 1.000 |
| 8.406 | -8.174 | 0.968 | 2.959 | 8.382 | 1.000 | 0.346 | 0.871 | 1.000 |
| 7.771 | -7.271 | 0.968 | 3.907 | 6.922 | 1.000 | -0.557 | 1.675 | 1.000 |
| 7.075 | -6.366 | 0.968 | 4.789 | 5.421 | 1.000 | -1.478 | 2.415 | 1.000 |
| 6.338 | -5.450 | 0.968 | 5.615 | 3.898 | 1.000 | -2.420 | 3.072 | 1.000 |
| 5.570 | -4.527 | 0.968 | 6.392 | 2.372 | 1.000 | -3.379 | 3.627 | 1.000 |
| 4.772 | -3.601 | 0.960 | 7.128 | 0.856 | 1.000 | -4.345 | 4.069 | 1.000 |
| 3.949 | -2.680 | 0.968 | 7.825 | -0.638 | 1.000 | -5.302 | 4.397 | 1.000 |
| 3.104 | -1.770 | 0.968 | 8.485 | -2.097 | 1.000 | -6.232 | 4.618 | 1.000 |
| 2.240 | -0.880 | 0.968 | 9.107 | -3.514 | 1.000 | -7.118 | 4.752 | 1.000 |
| 1.358 | -0.017 | 0.968 | 9.692 | -4.879 | 1.000 | -7.948 | 4.818 | 1.000 |
| 0.458 | 0.808 | 0.968 | 10.240 | -6.185 | 1.000 | -8.714 | 4.826 | 1.000 |
| -0.458 | 1.582 | 0.968 | 10.751 | -7.423 | 1.000 | -9.409 | 4.788 | 1.000 |
| -1.393 | 2.291 | 0.968 | 11.225 | -8.586 | 1.000 | -10.030 | 4.723 | 1.000 |
| -2.346 | 2.914 | 0.968 | 11.661 | -9.671 | 1.000 | -10.578 | 4.653 | 1.000 |
| -3.313 | 3.436 | 0.968 | 12.057 | -10.672 | 1.000 | -11.056 | 4.616 | 1.000 |
| -4.285 | 3.846 | 0.968 | 12.416 | -11.586 | 1.000 | -11.461 | 4.653 | 1.000 |
| -5.244 | 4.143 | 0.968 | 12.754 | -12.402 | 1.000 | -11.783 | 4.755 | 1.000 |
| -6.172 | 4.337 | 0.968 | 13.068 | -13.121 | 1.000 | -12.024 | 4.878 | 1.000 |
| -7.055 | 4.445 | 0.968 | 13.347 | -13.747 | 1.000 | -12.193 | 4.998 | 1.000 |
| -7.880 | 4.486 | 0.968 | 13.583 | -14.284 | 1.000 | -12.307 | 5.094 | 1.000 |
| -8.639 | 4.471 | 0.968 | 13.775 | -14.736 | 1.000 | -12.378 | 5.160 | 1.000 |
| -9.327 | 4.413 | 0.968 | 13.927 | -15.106 | 1.000 | | | |
| -9.942 | 4.332 | 0.968 | 14.042 | -15.397 | 1.000 | | | |
| -10.484 | 4.251 | 0.968 | 14.110 | -15.620 | 1.000 | | | |
| -10.957 | 4.203 | 0.968 | 14.082 | -15.779 | 1.000 | | | |
| -11.361 | 4.230 | 0.968 | 14.020 | -15.861 | 1.000 | | | |
| -11.683 | 4.320 | 0.968 | 13.956 | -15.907 | 1.000 | | | |
| -11.926 | 4.436 | 0.968 | 13.905 | -15.929 | 1.000 | | | |
| -12.097 | 4.550 | 0.968 | 13.832 | -15.942 | 1.000 | | | |
| -12.212 | 4.643 | 0.968 | 13.717 | -15.922 | 1.000 | | | |
| -12.283 | 4.707 | 0.968 | 13.583 | -15.823 | 1.000 | | | |
| -12.424 | 5.207 | 1.000 | 13.454 | -15.639 | 1.000 | | | |
| -12.484 | 5.278 | 1.000 | 13.292 | -15.401 | 1.000 | | | |
| -12.556 | 5.391 | 1.000 | 13.096 | -15.108 | 1.000 | | | |
| -12.637 | 5.581 | 1.000 | 12.862 | -14.757 | 1.000 | | | |
| -12.696 | 5.863 | 1.000 | 12.588 | -14.348 | 1.000 | | | |
| -12.711 | 6.239 | 1.000 | 12.276 | -13.878 | 1.000 | | | |
| -12.678 | 6.709 | 1.000 | 11.920 | -13.353 | 1.000 | | | |

Dans le tableau ci-dessus, le plan Z' = 0 correspond à un plan P0 de référence, situé à la base du profil, c'est-à-dire au niveau de la plate-forme de liaison avec le pied d'aube.

Comme indiqué au début de la présente description, le profil aérodynamique selon l'invention est sensiblement identique au profil nominal défini dans le tableau ci-dessus, c'est-à-dire qu'il varie tout au plus très légèrement par rapport à ce profil nominal, en étant en particulier défini dans une enveloppe de ± 1 mm dans une direction normale à la surface du profil nominal et/ou en ayant des coordonnées X, Y comprises dans la plage de ± 5 % par rapport aux coordonnées X,Y du profil nominal.

Les coordonnées du tableau ci-dessus sont données à partir d'une valeur Z' = 0 dans le plan de référence P0. La coordonnée Z' est adimensionnée, c'est-à-dire que pour un point P1, situé à une distance D du plan P0 (D est donc mesurée selon l'axe Z), la valeur de Z' est D/H où H représente la hauteur totale du profil, mesuré à partir du plan P0 jusqu'au sommet du profil. Bien entendu, en multipliant, dans le tableau ci-dessus, la coordonnée Z' par la hauteur H, on obtient les coordonnées complètes de l'aube.

Dans le tableau ci-dessus, le profil est caractérisé par 18 coupes à coordonnée Z' constante, pour lesquelles les coordonnées X et Y sont précisées. Dans chaque plan de coupe à coordonnées Z' constante, la section du profil est donnée par une courbe continue et lissée qui relie chaque point (X,Y). Entre chaque plan de coupe, le profil est interpolé de manière à générer un profil homogène.

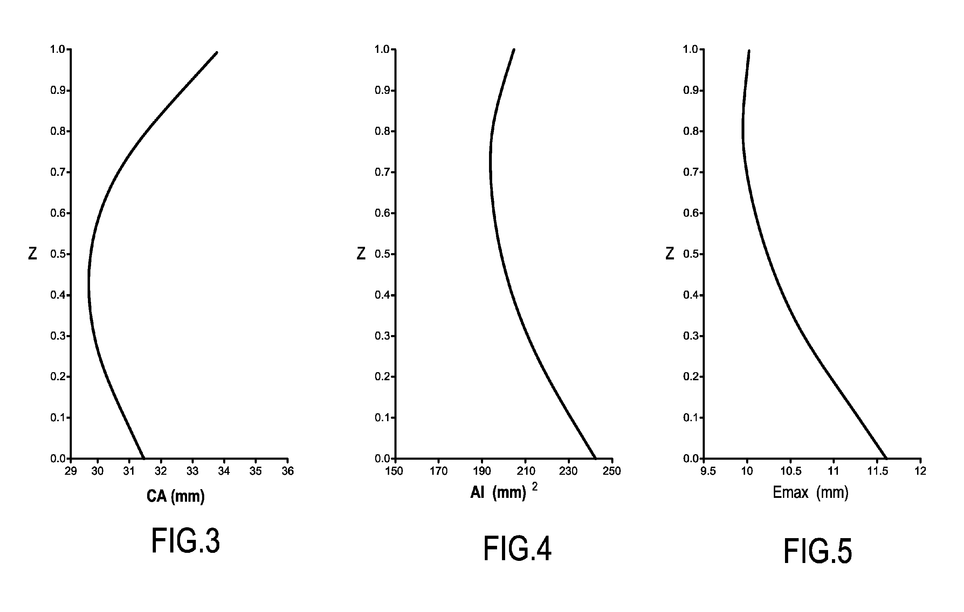

Sur la figure 2, on a représenté schématiquement une section du profil 16 dans un plan X,Y parallèle au plan P0. On a indiqué sur cette section le bord d'attaque BA et le bord de fuite BF. Dans cette section, la corde C du profil est déterminée par le segment reliant les points BA et BF. La corde axiale CA du profil est la projection sur l'axe X de ce segment C. Avantageusement, la relation entre la coordonnée Z' adimensionnée et cette corde axiale CA pour le profil nominal à partir duquel est déterminé le profil selon l'invention, est conforme à la courbe de la figure 3.

Sur la figure 2, le contour externe du profil nominal dans le plan X,Y considéré donne une courbe continue S. L'aire intérieure AI de ce contour externe est l'aire de la surface délimitée par cette courbe S. Avantageusement, la relation entre la coordonnée Z' et cette aire intérieure AI pour le profil nominal, est conforme à la courbe de la figure 4.

La valeur Emax indiquée sur la figure 2 est l'épaisseur maximum du profil d'aube dans le plan X,Y considéré. Par convention, cette épaisseur maximum est déterminée, dans chaque plan X,Y, comme étant la longueur du segment le plus long qui coupe orthogonalement une tangente T à la ligne moyenne LM du profil. Cette ligne moyenne, également appelée squelette ou ossature est la ligne formée par tous les points équidistants entre l'extrados E et l'intrados I du profil.

De préférence, la relation entre la coordonnée Z' et cette épaisseur maximum Emax du profil nominal est conforme à la courbe de la figure 5.

Les évolutions de la corde axiale CA, de l'aire AI et de l'épaisseur maximum Emax indiquées ci-dessus par référence aux courbes des figures 3, 4 et 5 contribuent à l'optimisation du profil aérodynamique de l'invention.

Une aube de turbine, en particulier pour une roue de turbine mobile, présentant un profil aérodynamique tel que défini ci-dessus, en référence au tableau 1 et aux courbes des figures 3 à 5, permet d'optimiser l'écoulement d'air au voisinage du profil aérodynamique et la transformation de l'énergie cinétique de l'air s'écoulant ainsi, en énergie mécanique sur un arbre entraîné par la roue mobile.

Il est avantageux que la roue mobile comporte entre 60 et 68 aubes ayant des profils aérodynamiques conformes à l'invention.

## Revendications

1. Profil aérodynamique d'aube de turbine, **caractérisé en ce que**, à froid et à l'état non revêtu, ledit profil (16) est sensiblement identique à un profil nominal déterminé par les coordonnées cartésiennes X, Y, Z' données dans le tableau 1, dans lequel la coordonnée Z' est le quotient D/H où D est la distance du point considéré à un plan P0 de référence, situé à la base du profil nominal et H est la hauteur de ce profil, mesurée depuis ledit plan de référence jusqu'au sommet de l'aube, les mesures D et H étant prises radialement par rapport à l'axe de la turbine, tandis que la coordonnée X est mesurée dans la direction axiale de la turbine.

2. Profil aérodynamique selon la revendication 1, **caractérisée en ce que** la relation entre la coordonnée Z' et la corde axiale CA du profil nominal est conforme à la courbe de la figure 3.

3. Profil aérodynamique selon la revendication 1 ou 2, **caractérisé en ce que** la relation entre la coordonnée Z' et l'aire intérieure définie par le contour externe du profil nominal dans un plan X,Y est conforme à la courbe de la figure 4.

4. Profil aérodynamique selon l'une quelconque des revendications 1 à 3, **caractérisé en ce que** la relation entre la coordonnée Z' et l'épaisseur maximum Emax du profil nominal mesurée dans un plan X,Y est conforme à la courbe de la figure 5.

5. Profil aérodynamique selon l'une quelconque des revendications 1 à 4, **caractérisé en ce que** ledit profil est défini dans une enveloppe de ± 1mm dans une direction normale à la surface du profil nominal.

6. Profil aérodynamique selon l'une quelconque des revendications 1 à 4, **caractérisé en ce que** les coordonnées X, Y dudit profil sont comprises dans la place de ± 5% par rapport aux coordonnées X,Y du profil nominal.

7. Aube de turbine, **caractérisé en ce qu'**elle présente un profil aérodynamique selon l'une quelconque des revendications 1 à 6.

8. Turbine, **caractérisée en ce qu'**elle comporte des aubes de turbine présentant des profils aérodynamiques selon l'une quelconque des revendications 1 à 6.

9. Turbine selon la revendication 8, **caractérisée en ce qu'**elle comporte une roue mobile ayant entre 60 et 68 aubes qui présentent des profils aérodynamiques selon l'une quelconque des revendications 1 à 6.
